# EUROPEAN PATENT APPLICATION

(11) **EP 3 572 176 A1**
(43) Date of publication of application: **27.11.2019**
(21) Application number: 19163677.8
(22) Date of filing: 19.03.2019
(51) Int. Cl.: B23K 9/18, B23K 9/23, B23K 26/00, B23K 26/14, B23K 26/34, B23P 6/00, B23K 26/082, B23K 26/12, B23K 101/00, B23K 103/18

(54) **ADDITIVE MANUFACTURING PROCESS AND APPARATUS**

(30) Priority: 19.04.2018 GB 201806374
(71) Applicant: Rolls-Royce plc, London SW1E 6AT (GB)
(72) Inventor: Clark, Daniel, Derby, Derbyshire DE24 8BJ (GB); Jones, Martyn, Derby, Derbyshire DE24 8BJ (GB)
(74) Representative: Rolls-Royce plc

(57) **Abstract**

Tip surfaces (16) of aerofoils (4) of a bladed disk (2) are repaired by an additive layer manufacturing process in which a laser beam (12) is directed at the tip surface (16) to create an interaction zone while metallic powder is delivered from powder delivery nozzles (8) onto a locus of delivery of larger area than the interaction zone. The bladed disk (2) and the powder delivery nozzles (8) are situated within a controlled environment enclosure (6), while a laser (10) generating the laser beam (12) is situated outside the enclosure (6). The laser interaction zone trajectory (10) is controllable independently of the movement of the powder delivery nozzles (8) and so can execute rapid accelerations and decelerations, and changes of direction, enabling complex space filling scanning patterns to be performed on the tip surface (16).

## Description

This disclosure relates generally to an additive layer manufacturing process and to apparatus for carrying out the process. The disclosure is particularly, although not exclusively, concerned with the use of such a process and apparatus to repair components of titanium, titanium alloy or nickel alloy, such as components of a gas turbine engine. Other (non-aerospace) industries might use corrosion resistant alloys based on stainless steels or duplex stainless steels.

The repair of titanium based and nickel based parts through additive layer manufacturing processes employing laser deposition, such as metal powder deposition, is known in the art. An example is described in US2014/106068, which discloses a deposition device comprising a metal powder delivery device operatively connected to a laser. The deposition device thus has considerable mass and bulk and is complex and expensive. The mass of the deposition device means that it is unsuited to rapid acceleration, deceleration and direction changes. Also, the bulk of the deposition device limits its use on components where access to the region to be treated is restricted.

According to one aspect of the present disclosure there is provided an additive layer manufacturing process for forming additive layers on a substrate, the process comprising:
i) directing an energy beam from an energy beam emitter to create an interaction zone on the surface of the substrate;
ii) operating an additive material feeder to supply powdered additive material to a locus of delivery on the surface of the substrate, the locus of delivery being larger than the interaction zone; and
iii) controlling the energy beam emitter to displace the energy beam relatively to the substrate and to the additive material feeder to cause the interaction zone to execute a specific trajectory on the substrate within the locus of delivery of the powdered additive material while continuing to supply the additive material to the locus of delivery, thereby forming a layer of additive material on the substrate.

The energy beam emitter may be a laser. The substrate and the powder may be of metallic material.

The substrate may be a damaged component, the process being performed to repair a damaged region of the component. The component may be a component of a gas turbine engine, such as a bladed disk or bladed drum or an impellor or a rotor.

The component may comprise an aerofoil having a tip surface at which the additive material is applied. The process may also comprise heating a further region of the component away from the tip surface. The further region may be heated by the energy beam from the energy beam emitter, the energy beam being deflected onto the further region by a deflecting arrangement, for example at least one mirror. In alternative embodiments, the further region may be heated by a heating arrangement separate from the energy beam emitter, such as a second energy beam emitter, for example a second laser.

The specific trajectory of the energy beam may execute a space filling scanning pattern on the substrate surface. The scanning pattern may be a fractal scanning pattern.

According to another aspect of the present disclosure there is provided an additive layer manufacturing apparatus for performing an additive layer manufacturing process in accordance with the first aspect of the present disclosure, the apparatus comprising:
i. a substrate support;
ii. an energy beam emitter positioned to direct an energy beam at a substrate mounted on the substrate support to create an interaction zone on the surface of the substrate;
iii. an additive material feeder positioned to feed powdered additive material to a locus of delivery on the surface of the substrate, the locus of delivery being larger than the interaction zone; and
iv. an energy beam controller (29) for controlling the energy beam emitter (10) to displace the energy beam (12) relatively to the substrate (2) and to the additive material feeder (8).

An enclosure may be provided, the substrate support and the additive material feeder being disposed within the enclosure, and the energy beam emitter being disposed outside the enclosure.

The additive material feeder may be a powder delivery nozzle.

A beam deflecting arrangement may be provided, the beam deflecting arrangement being positioned to deflect an energy beam emitted from the energy beam emitter onto a surface of the substrate away from the interaction zone. The beam deflecting arrangement may comprise at least one mirror.

In certain embodiments, the beam may be tilted relative to the plane of the layer being deposited, for example to change the angle of incidence around corners. The deposited layer may not be planar, for example, dish-shaped depressions may be formed.

The energy beam controller may be configured to control the direction of the energy beam to execute a space filling scanning pattern on the substrate.

The energy beam emitter may be one of two or more independently controllable energy beam emitters.

There could be separate independent heating for the substrate to reduce thermal strains.

Arrangements will now be described, by way of example, with reference to the accompanying drawings, in which:
Figure 1 is a schematic diagram of an additive layer manufacturing apparatus;
Figure 2 represents a bladed disk of a gas turbine engine;
Figure 3 is a radial view of the bladed disk of figure 2 undergoing the process in the equipment of Figure 1;
Figures 4 to 7 are schematic end views of an aerofoil of the bladed disk of figure 2 showing different scan patterns;
Figure 8 is a schematic end view of an aerofoil of the bladed disk of figure 2 showing in diagrammatic form the relationship between powder delivery and laser interaction zone; and

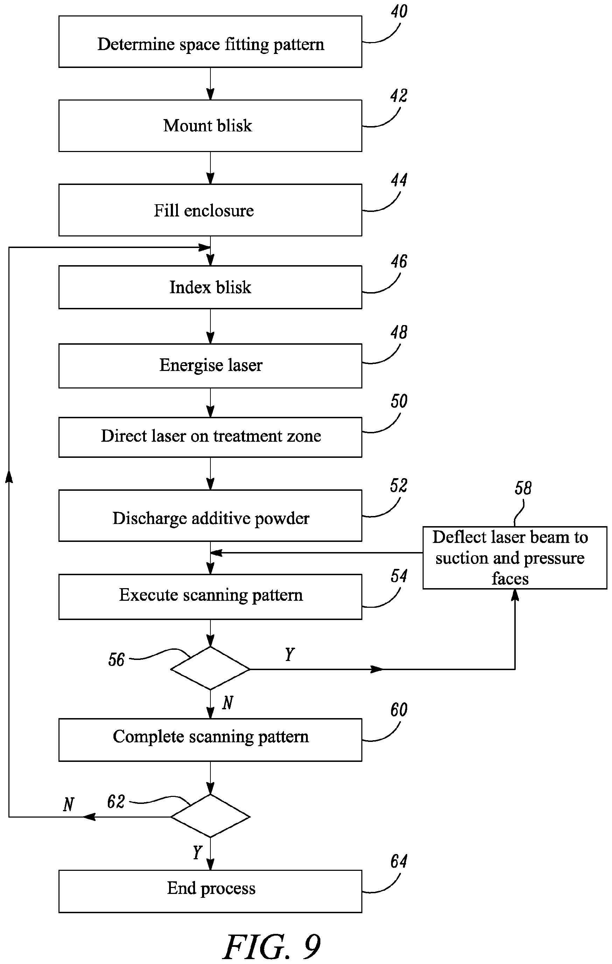

Figure 9 is a schematic flow diagram representing an additive layer manufacturing process carried out using the apparatus of Figure 1.

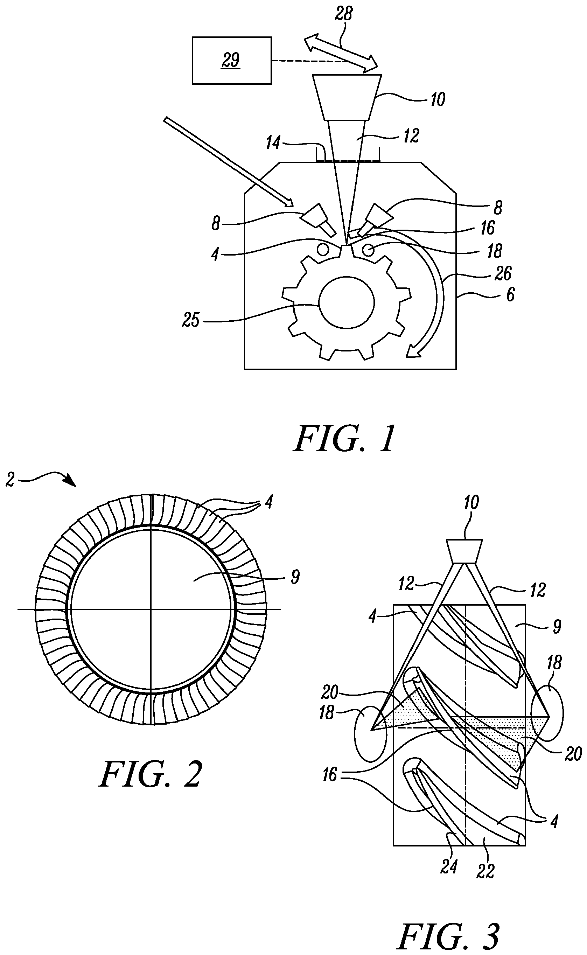

The apparatus shown in Figure 1 is illustrated as performing an additive layer deposition process on a substrate 2 in the form of a bladed disk. The bladed disk 2 is shown only in diagrammatic form in Figure 1, but is represented in more detail in Figures 2 and 3. It will be appreciated that the bladed disk 2 comprises a large number of aerofoils 4 which are distributed around a hub 6 of the bladed disk 2 and overlap one another in the axial direction, as shown in Figure 3. Typically the bladed disk 2 is made from the titanium or nickel alloy.

The apparatus of Figure 1 comprises an enclosure 6 in which a controlled atmosphere is maintained, and which accommodates the bladed disk 2, supported by a substrate support 25. A pair of additive material feeders 8 in the form of powder delivery nozzles are situated within the enclosure 6 and are directed to supply metal powder to the end surface 16 at the tip of the uppermost aerofoil 4. In the schematic arrangement shown in Figure 1, two powder delivery nozzles 8 are positioned one on each side adjacent the tip of the uppermost aerofoil 4, i.e. the aerofoil for at top dead centre (TDC) or at the 12 o'clock position. In other embodiments, there may be only one nozzle 8.

The powder delivery nozzles 8 can take any suitable form, but in certain embodiments they may have the form of a rectangular slot of sufficient size to deliver the metal powder over a substantial proportion of the area of the tip surface 16, and possibly over the entire tip surface 16.

A laser 10 is situated outside the enclosure 6 and is positioned to direct a laser beam 12 through a transparent window 14 in the wall of the enclosure 6. The laser beam 12 is focused on an end surface 16 at the tip of the uppermost aerofoil 4. It will be appreciated that an energy beam emitter other than the laser 10 may be employed, for example an electron beam emitter emitting an electron beam into the enclosure 6. Electron beam systems require low pressure or vacuum. This contradicts the blown powder delivery functionality from the nozzle; in this case the powder would need to be gravity fed.

Two mirrors 18 are provided within the enclosure 6, on opposite sides of the bladed disk 2, so that they are situated one on each side of the uppermost aerofoil 4, as shown in Figure 3. The mirrors are positioned so that, by appropriate control of the laser 10, the laser beam 12 can be directed at one or the other of the mirrors 18 to be reflected as reflected beams 20 onto side surfaces of the aerofoil 4, i.e. the pressure and suction surfaces 22, 24.

Aerofoils in gas turbine engines are subject to various kinds of damage and wear in operation. Some bladed discs rotate within casings that have abradable linings which are abraded by the blade tips as the disc rotates to form a channel within the lining so as to minimise the leakage path between the tips of the blades and the lining. During operation, the tips of the blades also wear, and this can increase the clearance between the blade tips and the lining. This in turn increases leakage across the blade tips, and reduces the efficiency of the engine.

Consequently, it is necessary from time to time to replace or repair blades which have become excessively worn. In the case of bladed disks, where the blades are integral with the disc and so cannot easily be individually replaced, repair of the blade tips in situ is the only alternative to complete replacement of the entire bladed disk.

Known additive layer manufacturing processes for repairing blade tips in situ generate high temperatures at the site of the repair, and controlled cooling of both the repair site and the underlying original blade material is necessary in order to achieve the desired microstructure within the blade material so that the repaired blade has a resistance to future failure which at least approximates that of the original blade.

In known bladed disk aerofoil repair techniques using blown powder laser deposition, the laser beam delivery and powder delivery are integrated into a single deposition head which operates using a 5+ axis manipulation system. The deposition head travels over a toolpath which is calculated so as to build up material as desired, and also to regulate temperature accumulation within the material, in order to achieve the desired microstructure and mechanical properties of the blade. This temperature regulation is achieved by stops and starts in the toolpath which control the cooling rate of the deposit and of the underlying blade material.

Because the known deposition head incorporates both the laser beam delivery and the powder delivery, the manipulation system for controlling them is complex and expensive. The mass and bulk of the powder feeder limits the speed at which it can be moved, and also limits acceleration, deceleration and rapid changes of direction. These limitations are thus also applied to the heat source, i.e. the laser. In particular, the necessary deceleration of the deposition head before direction changes causes process variations which affect local cooling rate and hence microstructural outcomes. In addition, the reduced velocity of the deposition head while powder mass flow rate is maintained causes a local fluctuation in the height of the deposit. This height variation is progressive and can result in intermittent discontinuities even with nominally self-levelling process settings.

In use of the apparatus shown in Figure 1, the laser 10 is mounted outside the enclosure 6, separately from the powder delivery nozzles 8. As a result, the motion of the laser 10, and more specifically the location of its impingement point or treatment zone on the substrate 2, can be controlled independently of the motion of the powder delivery nozzles 8, and the laser 10 is therefore not subject to the movement limitations that govern the powder delivery nozzles 8.

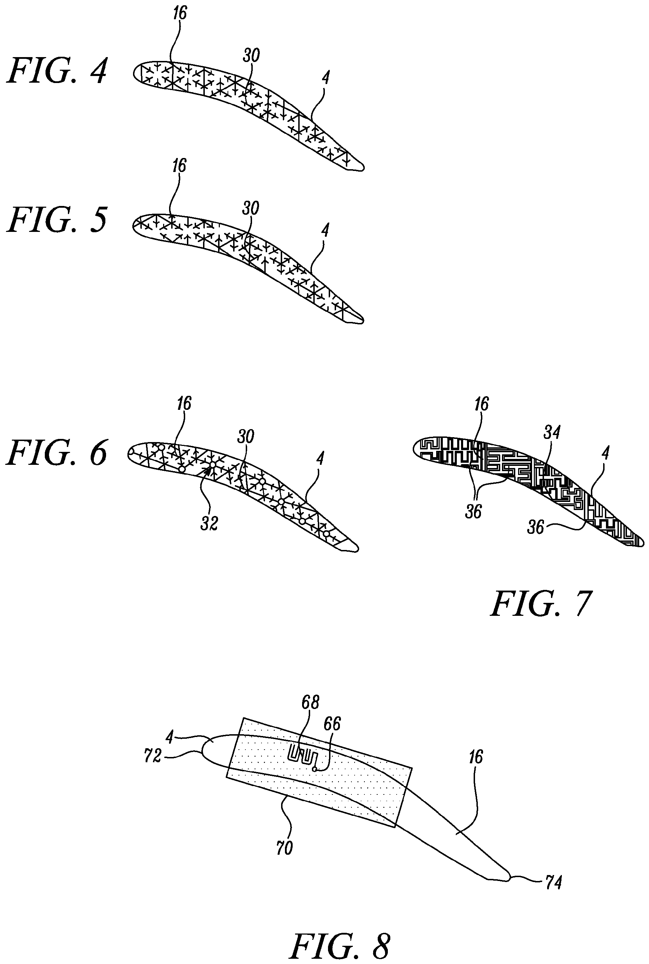

In more detail, the bladed disk 2 is mounted within the enclosure 6 on the substrate support 25 and can be indexed about its rotational axis as indicated by an arrow 26 in order to position any one of the aerofoils 4 at the uppermost position, so that its tip face 16 is presented to the laser beam 12. The enclosure 6 is filled with an inert gas, such as argon or helium, in order to exclude oxygen. The laser 10 is then activated to generate the laser beam 12 which is focused on the tip surface 16 to create a laser spot constituting an interaction zone 66 (Figure 8). The laser 10 is operated under the control of a laser controller 29 to move the interaction zone 66 to execute a predetermined pattern 68 on the tip surface 16. The laser 10 is mounted on a tilt and traverse mechanism indicated by an arrow 28 which enables the laser 10 to move in the chordwise direction with respect to the tip surface 16 of the aerofoil 4. The tilt and traverse mechanism 28 can also tilt the laser 10 and move it transversely of the chordwise direction, but in addition the laser beam 12 is controlled by laser optics which can adjust the direction of the laser beam 12 with respect to the laser 10.

The powder delivery nozzles 8 are mounted within the enclosure 6 to deliver powder over a locus of delivery 70 (Figure 8). The nozzles 8 may be displaceable to move the locus of delivery 70 over the tip surface 16. The powder delivery nozzles deliver the powder, which may or may not have the same metallic composition as the underlying bladed disk 2 or aerofoil 4, in a flow of inert gas. Figure 8 shows, in schematic form, the locus of delivery 70 of the powder. Although shown extending over only part of the tip surface 16, the nozzle or nozzles 8 may deliver the metallic powder over the entire tip surface 16 so that the tip surface 16 is all, or almost all, covered by metallic powder and therefore the locus of delivery 70 covers the entire tip surface 16.

At each position of the interaction zone 66 along the predetermined pattern 68 executed by the laser beam 12, a melt pool is formed and metal powder in the area of the locus of delivery 70 impinged upon by the interaction zone 66 is melted or sintered to form an additive layer on the molten metal in the treatment zone. As the laser beam 12 moves over the tip surface 16 so that the interaction zone 66 follows the predetermined path 68, the previously molten metal cools and solidifies. In this way, an added layer is built up on the tip surface, and further layers can be built up in the same way until the desired tip profile is achieved. Thus, after each layer is completed, the nozzles 8 are raised (i.e. moved in the direction away from the initial tip surface 16) and the laser beam 12 is refocused in preparation for the formation of the next layer of additive material.

Because the laser 10, and more particularly the laser beam 12, move independently of the powder delivery nozzles 8, the interaction zone 68 can execute rapid movements over the tip surface, with sharp changes of direction and large accelerations and decelerations in order to follow the predetermined pattern without the limitations on movement imposed by the mass and bulk of the delivery nozzles 8. The delivery nozzles 8 themselves are controlled independently of the laser 10 in order to deliver the metal powder to the locus of delivery 70 as it progresses over the tip surface 16. It will be appreciated that the locus of delivery 70 is significantly larger in area than the interaction zone 66, especially if it covers the entire area of the tip surface 16. By way of example, the chord width of the aerofoil 4 at the tip surface 16 may be 30 mm, while the diameter of the laser spot or interaction zone 66 may be in the range 800µm to 1 mm. Thus the area ratio of the powder locus of delivery 70 to the interaction zone 66 may be greater than 10, and may be greater than 25. In certain embodiments it may be greater than 40, or greater than 100.

In order to control the temperature profile of the aerofoil 4 as it cools, the laser 10 can be controlled, either by the tilt and traverse mechanism 28 or by the laser optics, to direct the laser beam 12 to one or other of the mirrors 18 which in turn direct a reflected laser beam 20 at the pressure and suction surfaces 22, 24 of the aerofoil. The added heat imparted in this way controls the solidification rate and subsequent post-solidification cooling rate of the aerofoil 4, so as to achieve the desired microstructure within the material of the aerofoil 4. This enables distortion and residual stresses in the aerofoil 4 to be managed in situ as the aerofoil evolves.

Although the laser beam 12 could operate continuously, in certain embodiments the laser 10 is a pulsed laser, and the predetermined pattern 68 executed by the laser beam 12 is a sequence of individual spots which overlap one another as a series of melt pools.

Once the repair of the aerofoil 4 is complete in the sense that the layers of additive material have built up to achieve the desired blade length, the bladed disk 2 is indexed as indicated by the arrow 26, to bring the next aerofoil 4 into the uppermost position for treatment, and so on until all of the aerofoils 4 of the bladed disk 2 that require repair have been treated.

Because the laser 10 is decoupled from the powder delivery system, the speed of movement of the laser beam 12 over the aerofoil tip can be significantly increased by comparison with known systems in which the laser 10 and the powder delivery system are integrated into a common deposition head. By employing a small fast moving laser spot 66, rapid solidification of the material after melting can be achieved, which improves the microstructure within the aerofoil 4. Also, the complexity of the predetermined scanning pattern can be improved since it is no longer dependent on the movement of a bulky deposition head incorporating the powder delivery nozzles. As indicated in Figures 4 to 7, toolpaths in the form of fractal patterns or Hilbert loops can be achieved. In Figure 4, a typical fractal pattern 30 is shown which enables complete coverage of the tip surface 16 of the aerofoil 4 in an efficient manner. Figure 5 shows a similar fractal toolpath 30 to that of Figure 4, although offset with respect to that of Figure 4 so that toolpaths of successive deposition layers do not coincide exactly. This avoids the propagation of seams or other discontinuities through the deposited layers.

Figure 6 shows a further fractal scanning pattern in which revisit nodes 32 are indicated, these being locations to which the laser beam will return in the course of the deposition process in order to simplify the scan patternation rules.

Figure 7 shows an alternative scanning pattern in the form of Hilbert loops 34. As shown, the pattern is divided into separate blocks 36, each containing an individual (partial) Hilbert loop.

Space filling scans as shown in Figures 4 to 7 minimise heat buildup in the aerofoil, optimise overlap of the laser spots, and allow faster regulation of energy directly by the input laser 10, facilitating feedback control. It will be appreciated that the scanning patterns shown are merely examples of a wide variety of scanning patterns that can be used. Variations in scan spacings, pattern alignment, and scan line axis position can be made. For example, the scan line axes can be staggered from layer to layer, and may follow the aerofoil axis.

Furthermore, the fast travel speed of the interaction zone 66 means that the interaction zone can rapidly and closely follow the profiles of the leading and trailing edges 72, 74 of the tip surface 16.

The separation of the laser 10 from the powder delivery nozzles 8 and the consequent removal of limitations on the laser movement enables greater process control at lower cost, while achieving equivalent microstructure by control of freezing rate, solid-state cooling rate, cooling direction and flaws. The increased process control makes it possible to use continuous toolpaths, minimising stops and starts and so reducing the number of defects. The increased process control, including the ability to heat the pressure and suction surfaces 22, 24 during the deposition process, allows precise control of the cooling rate and consequently of the microstructure of the built-up aerofoil, along with balancing and minimising of residual stresses.

The increased flexibility of movement of the laser 10 also enables the deposition parameters for edges of the tip surface 16 (such as laser spot velocity and size, and laser power) to be varied rapidly as the tool path is followed. The rapid laser scanning permits a "spatial energy sharing" layer processing strategy such that solidification and cooling through precipitation temperatures is balanced over the tip surface 16. In other words, solidification rates can be kept rapid with steep isotherms from the liquidus temperature by rapid scanning and short local interaction times, while further thermal impulses from the laser 10 may be applied to regulate solid-state cooling to control stress and distortion. In addition, forced convection may be used to accelerate cooling where appropriate.

Variations in parameters for successive deposited layers can be employed to achieve more consistent shape and microstructural (solidification and cooling rate) outcomes.

Although the laser 10 has been described as moving along an axis as indicated diagrammatically by the arrow 28, it will be appreciated that the impingement point of the laser beam 12 on the tip surface can be controlled by tilting of the laser 10, instead of, or in addition to, translational movement. Also, the traverse indicated by the arrow 28 may be linear or curved, and could be in a direction normal to the tip surface 16. Such displacement normal to the tip surface, or the laser optics for the laser 10, could be used to adjust the size of the laser spot on the tip surface 16 or on the pressure and suction surfaces 22, 24, in order to adjust energy distribution over the aerofoil 4, for example as impingement angle of the laser beam 12 on the aerofoil surface changes.

Each deposited layer will affect the rate of heat loss from the evolving aerofoil 4, and consequently the laser can be controlled to adjust the input heat on a layer by layer basis in order to maintain a steady state of heat flow in the evolving aerofoil 4.

As shown in Figure 3, the laser beam 12 may be split to produce separate spots on the aerofoil surface, arriving from different directions. The energy split between the different spots may be varied. Also, the energy distribution across each spot may be varied, for example as a Tailored Optical Intensity Distribution.

One or more height control sensors may be added to the equipment shown in Figure 1, to regulate the incremental buildup of each deposited layer.

Figure 8 is a flow diagram representing the process described above.

An initial step 40 is to determine, from the characteristics of the aerofoil 4, the optimum space fitting pattern 30, 34 to achieve the desired layer build up and the optimum solidification and cooling characteristics during the deposition process. The bladed disk 2 is then mounted in the enclosure 6 by means of the substrate support 25 at step 42, and the enclosure is then hermetically sealed and filled with an inert gas at step 44 in order to avoid oxidation and other degradation of the bladed disk 2 during deposition.

At step 46 the bladed disk is rotated, if necessary, by means of the substrate support 25 to bring one of the aerofoils 4 to the uppermost position, as shown in Figure 1, opposite the laser 10.

At step 48 the laser is energised and, in step 50, is directed at the treatment zone on the tip 16 of the aerofoil 4, which is at a position corresponding to the start of the space fitting pattern. At step 52, the nozzles 8 are activated to deliver powdered additive material to the tip surface 16 and then, at step 54, the laser is operated by the controller 29 to execute the predetermined scanning pattern. At step 56, a determination is made as to the requirement for solidification and cooling control of the aerofoil 4. This determination can be made either by sensing the temperature of the aerofoil 4, or in accordance with a predetermined routine associated with the scanning pattern. If temperature regulation is required, step 58 is initiated at which the laser beam 12 is deflected, as shown in Figure 3, by the mirrors 18 onto the pressure and suction surfaces 22, 24. If no temperature regulation is required, the scanning pattern continues at step 60.

At decision point 62, a determination is made as to whether or not all of the aerofoils 4 of the bladed disk 2 have been subjected to the deposition process. If all aerofoils 4 have been treated, the process terminates at step 64. If not, the process returns to step 46 and the bladed disk 2 is indexed around by the appropriate angle to present the next aerofoil 4 to the laser beam 12.

Although the above description refers to the repair of a damaged or worn bladed disk 2, it will be appreciated that the process is also suitable for repairing other components, for example impellers (aero and power) and seal fins, and also for the manufacture of original equipment components.

## Claims

1. An additive layer manufacturing process for forming additive layers on a substrate (2), the process comprising:
i) directing an energy beam (12) from an energy beam emitter (10) to create an interaction zone (66) on the surface (16) of the substrate (2);
ii) operating an additive material feeder (8) to supply powdered additive material to a locus of delivery (70) on the surface (16) of the substrate (2), the locus of delivery (70) being larger than the interaction zone (66);
iii) controlling the energy beam emitter (10) to displace the energy beam (12) relatively to the substrate (2) and to the additive material feeder (8) to cause the interaction zone (66) to execute a specific trajectory on the substrate (2) within the locus of delivery (70) of the powdered additive material while continuing to supply the additive material to the locus of delivery (70), thereby forming a layer of additive material on the substrate (2).

2. The additive layer manufacturing process as claimed in Claim 1, in which the energy beam emitter (10) is a laser.

3. The additive layer manufacturing process as claimed in any one of the preceding claims, in which the substrate (2) and the powdered additive material are metallic.

4. The additive layer manufacturing process as claimed in any one of the preceding claims, in which the substrate (2) is a damaged component and in which the process is performed to repair a damaged region of the component (2).

5. The additive layer manufacturing process as claimed in Claim 4, in which the component (2) comprises an aerofoil (4) having a tip surface (16) at which the additive material is applied.

6. The additive layer manufacturing process as claimed in Claim 5, in which the process also comprises heating a further region (22, 24) of the component (2) away from the tip surface (16).

7. The additive layer manufacturing process as claimed in Claim 6, in which the further region (22, 24) is heated by an energy beam (12) from the energy beam emitter (10), the energy beam (12) being deflected onto the further region (22, 24) by a deflecting arrangement (18).

8. The additive layer manufacturing process as claimed in any one of the preceding claims, in which the specific trajectory of the energy beam (12) executes a space filling scanning pattern (30, 32) on the substrate (2) surface.

9. The additive layer manufacturing process as claimed in Claim 8, in which the scanning pattern (30, 32) is a fractal scanning pattern.

10. Additive layer manufacturing apparatus for performing an additive layer manufacturing process in accordance with any one of the preceding claims, the apparatus comprising:
i. a substrate support (25);
ii. an energy beam emitter (10) positioned to direct an energy beam (12) at a substrate (2) mounted on the substrate support (25) to create an interaction zone (66) on the surface (16) of the substrate (2);
iii. an additive material feeder (8) positioned to feed powdered additive material to a locus of delivery (70) on the surface (16) of the substrate (2), the locus of delivery (70) being larger than the interaction zone (66);
iv. an energy beam controller (29) for controlling the energy beam emitter (10) to displace the energy beam (12) relatively to the substrate (2) and to the additive material feeder (8)

11. Additive layer manufacturing apparatus as claimed in Claim 10, in which an enclosure (6) is provided, the substrate support (25) and the additive material feeder (8) being disposed within the enclosure (6), and the energy beam emitter (10) being disposed outside the enclosure (6).

12. Additive layer manufacturing apparatus as claimed in Claim 10 or Claim 11, in which the additive material feeder (8) is a powder delivery nozzle.

13. Additive layer manufacturing apparatus as claimed in any one of Claims 10 to 12, in which a beam deflecting arrangement (18) is provided, the beam deflecting arrangement (18) being positioned to deflect an energy beam (12) emitted from the energy beam emitter (10) onto a surface of the substrate (2) away from the interaction zone (66).

14. Additive layer manufacturing apparatus as claimed in Claim 16, in which the beam deflecting arrangement (18) comprises at least one mirror.

15. Additive layer manufacturing apparatus as claimed in any one of Claims 10 to 14, in which the energy beam controller (29) is configured to control the direction of the energy beam to execute a space filling scanning pattern (30, 32) on the substrate (2).
